# EUROPÄISCHE PATENTSCHRIFT

(11) **EP 2 419 255 B1**
(45) Veröffentlichungstag und Bekanntmachung des Hinweises auf die Patenterteilung: **31.12.2014**
(21) Anmeldenummer: 10716455.0
(22) Anmeldetag: 14.04.2010
(51) Int. Cl.: B29C 47/64, B29C 47/68, B29B 17/04, B29B 17/00

(54) **VERFAHREN UND VORRICHTUNG ZUR RECYCLIERUNG VON KUNSTSTOFFEN**
METHOD AND APPARATUS FOR RECYCLING PLASTIC MATERIALS
PROCEDE ET DISPOSITIF DE RECYCLAGE DE MATIERES PLASTIQUES

(30) Priorität: 17.04.2009 AT 5992009
(43) Veröffentlichungstag der Anmeldung: 22.02.2012
(60) Teilanmeldung: 14192228.6
(73) Patentinhaber: EREMA Engineering Recycling Maschinen und Anlagen Gesellschaft m.b.H., 4052 Ansfelden (AT)
(72) Erfinder: FEICHTINGER, Klaus, 4040 Linz (AT); HACKL, Manfred, 4040 Linz (AT); WENDELIN, Gerhard, 4030 Linz (AT)
(74) Vertreter: Wildhack & Jellinek
(86) Internationale Anmeldenummer: PCT/AT2010/000105
(87) Internationale Veröffentlichungsnummer: WO 2010/118447

(56) Entgegenhaltungen:
- WO-A1-2008/061269
- AT-B- 400 315
- DE-A1- 19 860 352
- US-A- 3 486 192
- POTENTE H ET AL: "ANALYSE DER HOMOGENISIEREFFEKTE IN NUTBUCHSENEXTRUDERN" PLASTVERARBEITER, HUETHIG GMBH, HEIDELBERG, DE, Bd. 39, Nr. 10, 1. Oktober 1988 (1988-10-01), Seiten 160,163-164,16, XP000000444 ISSN: 0032-1338
- N.N.: 'EREMA Filter Systems for Thermoplastics', [Online] Oktober 2004, Seiten 1 - 6 Erema Gefunden im Internet: <URL:http://www.extrusionauxiliary.com/site buildercontent/sitebuilderfiles/erema_filte r_e.pdf> [gefunden am 2012-07-30]
- N.N.: 'The EREMA plastics recycling system', [Online] Oktober 2007, Seiten 1 - 6 Erema Gefunden im Internet: <URL:http://www.ceeindustrial.com/public/da ta/companyCatalogue1227813946.pdf> [gefunden am 2012-07-30]

## Beschreibung

*Die Erfindung betrifft ein Verfahren zur Recyclierung von Kunststoffen gemäß dem Oberbegriff des Anspruchs 1 sowie eine Anordnung dafür gemäß dem Oberbegriff des Anspruchs 7.*

Aus dem Stand der Technik sind Verfahrensabfolgen in ähnlicher Form bereits seit langem bekannt. So ist bekannt, Kunststoffmaterial, das recycliert werden soll, zuerst in einem Schneidverdichter bei erhöhter Temperatur und, gegebenenfalls unter Beaufschlagung von Vakuum, aufzubereiten, anschließend in einem Extruder aufzuschmelzen und die Schmelze zu filtrieren, zu entgasen und abschließend beispielsweise zu granulieren. Vorrichtungen zur Durchführung solcher Verfahren sind beispielsweise aus der EP 123 771 B, der EP 390 873 B oder der AT 396 900 B bekannt.

*In der* WO 2008/061269 A1 *sind ein Verfahren und eine Vorrichtung beschrieben bei der die prozessualen Bearbeitungsschritte der Aufbereitung des Rohmaterials, des Aufschmelzens des aufbereiteten Materials, der Filtration der Schmelze zur Befreiung von Verunreinigungen, der Homogenisierung der filtrierten Schmelze, der Entgasung der homogenisierten Schmelze, sowie der Austragung und*/*oder Nachfolgebearbeitung der Schmelze, beschrieben sind.*

Weiters existieren zahlreiche Verfahren und Vorrichtungen um einzelne Schritte, z.B. die Entgasung der Schmelze, zu optimieren. So kann beispielsweise die Ausbildung einer Druckloszone vor den Entgasungsöffnungen vorgesehen, um für eine verlässliche Entgasung des Kunststoffmaterials zu sorgen. Weiters existieren einige Vorrichtungen in denen versucht wird, den Migrationsweg für die im Kunststoff eingeschlossenen Gasblasen möglichst gering zu halten, um den Gasblasen zu ermöglichen, aus der Schmelze auszutreten bevor diese an der letzen Entgasungsöffnung vorbeigefördert wird. Insbesondere handelt es sich dabei um Einrichtungen, die das Kunststoffmaterial in eine schlauchförmige Gestalt überführen.

Auch existieren zahlreiche Ausführungsformen diverser Schmelzefilter zur Entfernung von festen Fremdstoffen und/oder nicht aufgeschmolzenem Restpolymer.

All dies dient in erster Linie zur Erhöhung der Qualität des Endproduktes.

Der vorliegenden Erfindung liegt die Aufgabe zugrunde, ein verbessertes Verfahren zur Recyclierung von Kunststoffen zu schaffen, das ein Endprodukt von hoher qualitativer Güte liefert, wobei das Verfahren gleichzeitig mit hoher Produktivität geführt werden kann.

Weiters ist es Aufgabe der Erfindung eine Vorrichtung zur Durchführung dieses Verfahrens bzw. zur Recyclierung von Kunststoffen zu schaffen, die ebenfalls diese Vorteile bringt.

*Diese Aufgabe wird bei dem eingangs beschriebenen Verfahren zur Recyclierung von Kunststoffen, das die folgenden Bearbeitungsschritte umfasst:*
*a) Aufbereitung des Rohmaterials, wobei das Material, falls erforderlich zerkleinert und, in eine fluidartige Form gebracht wird und unter Erhaltung seiner Stückigkeit und Rieselfähigkeit, erwärmt und permanent gemischt, und gegebenenfalls entgast, erweicht, getrocknet, in seiner Viskosität erhöht und*/*oder kristallisiert wird,*
*b) Aufschmelzen des aufbereiteten Materials, zumindest soweit, dass eine Filtration möglich ist,*
c) *Filtration der Schmelze zur Befreiung von Verunreinigungen,*
*d) Homogenisierung der filtrierten Schmelze,*
*e*) *Entgasung der homogenisierten Schmelze, sowie*
*f) Austragung und*/*oder Nachfolgebearbeitung der Schmelze, z. B. durch Granulierung, Blasfolienbearbeitung,*
*wobei diese Bearbeitungsschritte in der angegebenen Reihenfolge prozessual aufeinanderfolgen, dadurch gelöst, dass die Temperatur des Materials bzw. der Schmelze während, zumindest aber am Ende, der Homogenisierung und vor Beginn der Entgasung zumindest gleich hoch wie, vorzugsweise höher als, die Temperaturen bei allen anderen Behandlungsschritten ist.*

*Durch die erfindungsgemäße Temperaturführung wird die Homogenisierung unterstützt, nämlich dadurch, dass die Temperatur während der Homogenisierung zumindest gleich hoch oder höher ist als im restlichen Verfahren. Auf diese Weise kann die Schmelze bestmöglich auf die bevorstehende Entgasung vorbereitet werden. Versuche haben gezeigt, dass die Qualität des Endproduktes überraschenderweise höher ist, wenn die Homogenisierung bei derart erhöhten Temperaturen durchgeführt wird.*

*Außerdem liefert* die Verfahrenführung in genau dieser Reihenfolge der Bearbeitungsschritte eine hohe Produktqualität bei gleichzeitig effizienter Verfahrensführung. Insbesondere *ist in diesem Zusammenhang auch vorteilhaft*, dass der Schritt der Homogenisierung erst nach der Filtration, jedoch vor der Entgasung der Schmelze Vorteile bringt, da auf diese Weise die Homogenisierung nicht durch allfällige grobe Verunreinigungen oder feste Fremdstoffe bzw. nicht aufgeschmolzene Kunststoffnester beeinträchtigt wird und gleichzeitig die anschließende Entgasung wirksam und effizient vollzogen werden kann, wobei die Gasblasen nahezu vollständig aus der Schmelze entfernt werden können. Auf diese Weise lässt sich ein Endmaterial von hoher Qualität erreichen, das für verschiedene Nachfolgebearbeitungen einsetzbar ist.

In der Praxis können störende Agglomerate beispielsweise durch Verschmutzungen, durch Füllstoffe oder, bei Mischpolymeren, durch andere Polymere gebildet werden. Generell beeinträchtigen diese Agglomerate die Endqualität des Kunststoffes auf verschiedene Weise, insbesondere die mechanischen und optischen Eigenschaften des Endproduktes. So führen beispielsweise Verschmutzungen, wie Papierfasern, Druckfarbenagglomerate, Kleberreste von Etiketten etc., die sich noch nach der Filtration in der Matrix befinden, zu Einbußen bei der Zugfestigkeit des Polymers oder zu optischen Defekten. Störsubstanzen, die trotz Filtration in der Schmelze verbleiben, sollten somit vorteilhafterweise möglichst fein und gleichmäßig verteilt werden. Dies gilt für Verschmutzungen, Polymere und Füllstoffe in gleicher Weise. Je feiner und gleichmäßiger diese Störstoffe in der Matrix verteilt sind, desto weniger negativ sind ihre Auswirkungen im Endprodukt. Diese Verteilung erfolgt durch die nach der Filtration nachfolgende Homogenisierung.

Zusätzlich wird durch die Homogenisierung auch eine weitere Zerkleinerung der Teilchen erreicht. Diese Verkleinerung der Störteilchen führt ebenfalls zu einer Qualitätssteigerung des Endproduktes, beispielsweise zu besseren mechanischen Werten bei Spritzgussteilen, zu geringeren optischen Beeinträchtigungen bei Folien, oder konkret zur Erreichung einer besseren Schlagzähigkeit bei der feinen Verteilung von Polyolefinen in einer PET-Matrix.

Allfälliges Restgas würde bei der abschließenden Bearbeitung ebenfalls zu Defiziten, wie beispielsweise Blasenbildungen, Folienrissen etc., führen. Beim erfindungsgemäßen Verfahren fängt somit der Schmelzefilter leicht gasende Stoffe aus der Schmelze auf, der Rest wird in der Homogenisierungsstrecke verteilt und zerkleinert und durch die anfallende Scherbeanspruchung werden temperatursensible Verschmutzungen zum Zersetzen gebracht. In der nachfolgenden Schmelzeentgasung wird dieses Gas beseitigt.

Auf der einen Seite werden temperatursensible Materialien durch die Homogenisierstrecke thermisch beansprucht und zum Abgasen gezwungen. Auf der anderen Seite werden die verbleibenden Teilchen so fein in der Polymermatrix verteilt, dass sie durch weitere thermische Beanspruchungen durch das umgebende Polymer besser geschützt werden und weniger zur Gasproduktion neigen. In den nachfolgenden Verarbeitungsschritten, z.B. in einem Blasfolienturm, wird nun ein gasfreier bzw. bläschenfreier und agglomeratfreier Film erzeugt.

Es werden somit durch die Filtration größervolumige Störsubstanzen und Verschmutzungen weitgehend entfernt. Kleinvolumige Störsubstanzen, die den Filter passieren und in der Schmelze verbleiben, werden durch die Homogenisierung fein und gleichmäßig verteilt. Dadurch stören sie weniger im Endprodukt und/oder werden in der anschließenden Entgasung nahezu vollständig entfernt.

Wird die Schmelze, wie dies im Stand der Technik teilweise praktiziert wird, bereits vor der Filtration homogenisiert, werden dadurch auch die Verunreinigungen zerkleinert und können die Filterfläche passieren bzw. werden nicht herausgefiltert. Dies ist jedoch nachteilig und soll verhindert werden.

Nach der Filtration sollen die noch enthaltenen Störstoffe durch die Homogenisierung jedoch möglichst zerkleinert und verteilt werden: Durch ihr verbessertes Oberflächen/Volumen-Verhältnis geben die feinen Partikel dann mehr Gas ab und können effizienter und vollständiger über die Entgasung entfernt werden. Dies wird zusätzlich durch eine gleichmäßige Verteilung in der Matrix unterstützt, da dadurch die Oberfläche noch weiter vergrößert wird. Außerdem verbessert sich durch die gleichmäßige Verteilung die Homogenität des Materials und damit dessen mechanische und optische Eigenschaften.

Wesentlich ist somit die Vorsehung jedes einzelnen der obigen Bearbeitungsschritte sowie die Einhaltung der exakten Reihenfolge bzw. Abfolge der Verfahrenskette.

Weitere vorteilhafte Ausgestaltungen des Verfahrens sind durch die Merkmale der abhängigen Ansprüche beschrieben:

Gemäß einer bevorzugten Verfahrensführung ist es vorteilhaft, dass die obigen Bearbeitungsschritte zeitlich und räumlich unmittelbar und direkt ohne Zwischenschritte aufeinanderfolgen. Zwar ist durchaus möglich, dass zwischen den obigen Bearbeitungsschritten auch Zwischenschritte eingefügt werden, beispielsweise dass das Material oder die Schmelze zeitweise zwischengelagert oder über nicht komprimierende Schnecken od. dgl. transportiert werden oder dass noch weitere Bearbeitungsschritte eingeschoben sind. Dennoch hat sich gezeigt, dass eine unmittelbare und direkte Abfolge der obigen Bearbeitungsschritte insbesondere hinsichtlich der Produktivität und der Effizienz des Verfahrens vorteilhaft ist. Auch steigert sich in der Regel die Qualität des Endproduktes, wenn auf Zwischenschritte verzichtet wird und das Material zügig in einer durchgehenden kontinuierlichen Verarbeitungskette verarbeitet wird. Diese Art der Verfahrensführung ist somit aus qualitativer und ökonomischer Hinsicht zu bevorzugen.

Eine weitere vorteilhafte Verfahrensführung ist dadurch gekennzeichnet, dass die Schmelze bei der Homogenisierung geschert und gemischt wird bzw. einer intensiven Scherspannung und Dehnspannung unterworfen und stark beschleunigt wird. Der Vorgang der Homogenisierung ist ein relativ komplexer Vorgang. Hierbei ist es vorteilhaft, wenn das Material sowohl einer Scherung als auch einer Mischung unterzogen wird, wobei gleichzeitig eine Temperaturerhöhung der Schmelze sowie eine Durchmischung der gescherten Teile mit den weniger gescherten Teilen erfolgt. Auf diese Weise lässt sich eine gleichmäßige Schmelze mit fein verteilten und sehr kleinen Störsubstanzen erzielen, die im Anschluss daran optimal und wirksam entgast werden kann.

In diesem Zusammenhang ist es besonders vorteilhaft, wenn vorgesehen ist, dass die Temperatur des Materials bzw. der Schmelze bei der Austragung bzw. die Temperatur bei der Nachfolgebearbeitung geringer ist als, oder maximal gleich ist wie, die Temperatur während bzw. am Ende der Homogenisierung. Es hat sich überraschenderweise gezeigt, dass die Qualität des Endproduktes steigt, wenn die Temperatur der Schmelze nach der Homogenisierung wieder verringert wird bzw. wenn die Entgasung und insbesondere die Austragung und eine allfällige Nachfolgebearbeitung bei vergleichsweise geringeren Temperaturen durchgeführt werden.

Zur vorteilhaften Verbesserung der Entgasungsleistung kann vorgesehen sein, dass während der Homogenisierung oder unmittelbar vor oder nach der Homogenisierung, jedoch nach der Filtration und vor der Entgasung, zur Verbesserung der Entgasungsleistung zellbildende Medien, z.B. Kohlendioxid, Stickstoff oder Wasser, in die Schmelze eingebracht werden.

Für die Qualität des Endproduktes und die Effizienz des Verfahrens ebenfalls vorteilhaft ist es, wenn vorgesehen ist, dass die Schmelze nach der Entgasung und bei oder vor der Austragung bzw. Nachfolgebearbeitung, insbesondere um bis zu 20%, vorzugsweise um 5 bis 10%, abgekühlt wird.

Eine Anordnung zur Recyclierung von Kunststoffen zur Durchführung des obigen Verfahrens umfasst:
a) zumindest eine Aufbereitungseinheit, insbesondere einen an sich bekannten Schneidverdichter bzw. Behälter mit umlaufenden Misch- und Zerkleinerungswerkzeugen, wobei das Material, falls erforderlich, zerkleinert und, in eine fluidartige Form gebracht wird und unter Erhaltung seiner Stückigkeit und Rieselfähigkeit, erwärmt und permanent gemischt, und gegebenenfalls entgast erweicht, getrocknet, in seiner Viskosität erhöht und/oder kristallisiert wird,
b) zumindest eine Aufschmelzeinheit zum Aufschmelzen des aufbereiteten Materials, zumindest soweit, dass eine Filtration möglich ist, insbesondere einen Extruder,
c) zumindest eine Filtrationseinheit zur Filtration der Schmelze,
d) zumindest eine Homogenisierungseinheit zur Homogenisierung der filtrierten Schmelze,
e) zumindest eine Entgasungseinheit zur Entgasung der homogenisierten Schmelze sowie
f) zumindest eine Austragseinheit zum Austrag und/oder zumindest eine Nachfolgebearbeitungseinheit zur Bearbeitung der Schmelze,
wobei die genannten Einheiten in der angegebenen Reihenfolge jeweils nacheinander geschaltet und prozessual hintereinander gekoppelt sind und das Kunststoffmaterial bzw. die Schmelze diese Einheiten in dieser Reihenfolge durchläuft.

Durch die prozessuale Aneinanderschaltung dieser Einheiten ist ein definierter Weg des Materials bzw. der Schmelze durch die erfindungsgemäße Vorrichtung bzw. die Verarbeitungskette vorgezeichnet. Auf diese Weise und mit dieser Anordnung lässt sich die Produktivität steigern und die Materialqualität, wie zuvor beschrieben, erhöhen.

*Erfindungsgemäß ist eine Steuerung zur jeweils unabhängigen Regulierung der jeweiligen Temperaturen des Materials bzw. der Schmelze in den einzelnen Einheiten vorgesehen.*

*Eine unabhängige Regulierung der Temperaturen in jeder einzelnen Einheit und bei jedem einzelnen Bearbeitungsschritt ist vorteilhaft für die Einstellung der Produktqualität.*

So hat es sich in Versuchen überraschenderweise gezeigt, dass es vorteilhaft ist, wenn die Steuerung die Temperaturen so regelt, dass die Temperatur des Materials bzw. der Schmelze während, zumindest aber am Ende, der Homogenisierung in der Homogenisierungseinheit und vor Beginn der Entgasung in der Entgasungseinheit zumindest gleich hoch wie, vorzugsweise höher als, bei allen anderen Behandlungsschritten in den anderen Einheiten ist, insbesondere dass die Temperatur des Materials bzw. der Schmelze bei der Austragung in der Austragungseinheit bzw. die Temperatur während der Nachfolgebearbeitung in der Nachfolgebearbeitungseinheit geringer ist als, oder maximal gleich ist wie, die Temperatur während bzw. am Ende der Homogenisierung in der Homogenisierungseinheit. Die Qualität eines solchen Endproduktes war in mehrfacher Hinsicht verbessert.

Zwar ist es bei vorteilhaften Ausgestaltungen der Anordnung möglich, dass weitere Einheiten zwischengeschaltet werden, doch ist es gemäß einer vorteilhaften Weiterentwicklung der Anordnung auch möglich, dass die Einheiten räumlich unmittelbar und direkt, ohne weitere dazwischengeschaltete Einheiten, nacheinander geschaltet und prozessual hintereinander gekoppelt sind. Auf diese Weise sind die Wege des Materials bzw. der Schmelze kurz und die Vorrichtung kann auf die notwendigsten Einheiten reduziert werden. Dies senkt die unmittelbaren Kosten und beschleunigt auch die Prozessführung und die Durchlaufzeiten bei zumindest gleichwertiger, oft auch erhöhter, Produktqualität.

Eine vorteilhafte Ausgestaltung der erfindungsgemäßen Anordnung sieht vor, dass die Homogenisierungseinheit, insbesondere eine Schnecke, derart ausgebildet ist, dass die Schmelze darin geschert und gemischt wird bzw. einer intensiven Scherspannung und Dehnspannung unterworfen und stark beschleunigt wird. Auf diese Weise ist es möglich, die Scherbereiche und die Mischbereiche so anzuordnen, dass die Strömungsverhältnisse in der Schnecke eine gute Homogenisierung erreichen lassen.

Eine vorteilhafte Anordnung ist, dadurch gekennzeichnet, dass die einzelnen Bearbeitungseinheiten (2) bis (5), vorzugsweise (2) bis (6), insbesondere (2) bis (7), axial hintereinander angeordnet sind bzw. auf einer gemeinsamen Längsachse liegen. Auf diese Weise kann eine räumlich platzsparende Anordnung erhalten werden, bei der das Material bzw. die Schmelze einen klaren vorgegebenen Weg nimmt.

Um die Entgasungsleistung zu verbessern, kann vorgesehen sein, dass eine Einheit zur Zugabe von zellbildenden Medien, z.B. Kohlendioxid, Stickstoff oder Wasser, in die Schmelze, vorgesehen ist, wobei die Einheit die zellbildenden Medien während der Homogenisierung oder unmittelbar vor oder nach der Homogenisierung, jedoch nach der Filtration und vor der Entgasung, einbringt.

Ebenfalls vorteilhaft ist es, wenn vorgesehen ist, dass, insbesondere in der Austragseinheit, eine Kühleinrichtung für die aus der Entgasungseinheit austretende Schmelze, beispielsweise ein Zylinder oder eine Schnecke, vorgesehen ist, die geeignet ist, die Schmelze nach der Entgasung und bei oder vor der Austragung bzw. Nachfolgebearbeitung, insbesondere um bis zu 20%, vorzugsweise um 5 bis 10%, abzukühlen.

Das erfindungsgemäße Verfahren sowie die erfindungsgemäße Vorrichtung werden im Folgenden exemplarisch unter Bezugnahme auf die beiliegenden Figuren beschrieben.
Fig. 1 zeigt ein skizziertes Schema einer erfindungsgemäßen Anordnung.
Fig. 2 zeigt eine konkrete Ausgestaltung einer erfindungsgemäßen Anordnung.
Fig. 3a und 3b zeigen die Ergebnisse von Vergleichsversuchen mit bedruckten Folien.
Fig. 4 und 5 zeigen die Ergebnisse von Vergleichsversuchen mit mit Klebeetiketten versehenen Folien.

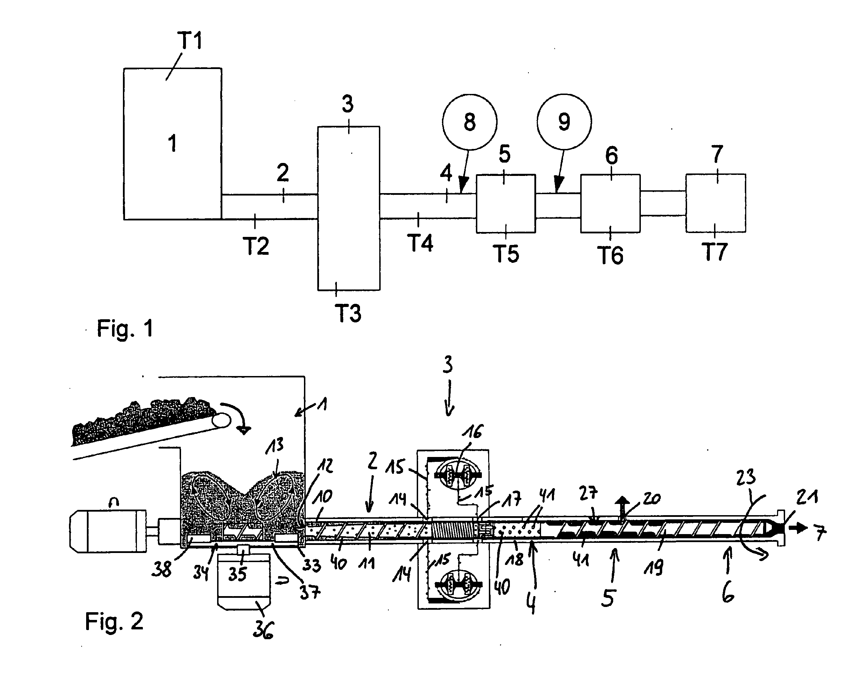

In Fig. 1 ist eine Vorrichtung bzw. eine Anordnung zur Recyclierung von Kunststoffen schematisch dargestellt. Die Anordnung umfasst von links nach rechts eine Aufbereitungseinheit 1, wobei es sich in der Regel um einen an sich bekannten Schneidverdichter bzw. Aufbereitungsbehälter handelt, in dessen Inneren umlaufende Misch- und Zerkleinerungswerkzeuge das darin vorgelegte Kunststoffmaterial bearbeiten und gegebenenfalls zerkleinern. Das Material ist dabei in einer permanent fluidartigen bzw. freifließenden Form und wird durch die Misch- und Zerkleinerungswerke trotz erhöhter Temperatur immer stückig und rieselfähig erhalten. In der Aufbereitungseinheit 1 wird das Material noch nicht aufgeschmolzen, sondern bestenfalls auf eine Temperatur knapp unterhalb des Schmelzpunktes erwärmt, insbesondere auf eine Temperatur im Bereich des jeweiligen VICAT-Erweichungspunktes des Materials. In Abhängigkeit des zu behandelnden Polymers wird das Polymer bereits in dieser frühen Verfahrenstufe entgast erweicht, getrocknet, kristallisiert und/oder in seiner Viskosität erhöht. Gegebenenfalls kann an den Aufbereitungsbehälter 1 auch ein Vakuum angelegt werden. Diverse Ausgestaltungen derartiger Aufbereitungseinheiten 1 sind aus dem Stand der Technik hinlänglich bekannt. Nur exemplarisch wird dabei auf die Druckschriften EP 123 771, EP 390 873, AT 396 900, AT 407 235, AT 407 970, etc. verwiesen.

Im unteren Bereich der Aufbereitungseinheit 1 ist eine Aufschmelzeinheit 2, insbesondere ein verdichtender Extruder, angeschlossen. Die Aufschmelzeinheit 2 dient zum Aufschmelzen des aufbereiteten Materials und zwar zumindest soweit, dass eine Filtration des Materials möglich ist. In der Anordnung gemäß Fig. 1 ist die Aufschmelzeinheit 2 unmittelbar und direkt an die Aufbereitungseinheit 1 angeschlossen, wobei aus dem Stand der Technik diverse Anschlussmöglichkeiten, z.B. radial oder tangential, bekannt sind. Dies hat den Vorteil, dass die Misch- und Rührwerkzeuge der Aufbereitungseinheit 1 das erweichte Kunststoffmaterial gewissermaßen in den Einzugsbereich der Aufschmelzeinheit 2 stopfen bzw. bringen.

Alternativ kann das Material auch über eine Zwischeneinheit an die Aufschmelzeinheit 2 überführt werden, beispielsweise über eine nicht komprimierende Übergangsvorrichtung, beispielsweise eine Stopfschnecke, insbesondere eine Schnecke mit gleichbleibender Gangtiefe, die die Aufbereitungseinheit 1 mit der Aufschmelzeinheit 2 gewissermaßen indirekt bzw. mittelbar verbindet, aber dennoch einen kontinuierlichen Materialstrom in die Aufschmelzeinheit 2 gewährleistet.

An die Aufschmelzeinheit 2 anschließend ist eine Filtrationseinheit 3 zur Filtration der Schmelze angeordnet. Derartige Schmelzefilter sind ebenfalls aus dem Stand der Technik in verschiedenen Ausführungsformen bekannt. Auf diese Weise werden z.B. feste Fremdstoffe, Fremdpolymere und/oder nicht aufgeschmolzene Polymernester entfernt.

Im Anschluss daran gelangt die Schmelze in eine Homogenisierungseinheit 4. Dabei handelt es sich in der Regel um einen Drehkörper, z.B. eine Schnecke, dessen Design eine gewisse Abfolge von Scherbereichen und Mischbereichen aufweist. Die innige Vermischung zur Homogenisierung des Polymers wird durch komplexe Strömungsverhältnisse im Inneren des Drehkörpers bzw. der Schnecke bzw. den entsprechenden Schneckenabschnitten bewerkstelligt. Neben Axialströmungen in Förderrichtung treten auch Radialströmungen und Axialströmungen gegen die Förderrichtung, sogenannte Leckströmungen auf. In den Scherbereichen erfolgt eine Temperaturerhöhung der Schmelze, wobei in den Mischbereichen eine Durchmischung der gescherten Teile mit den weniger gescherten Teilen und dadurch ein gewisser Temperaturausgleich erfolgt. Auf diese Weise werden die Störteilchen zerkleinert, verteilt und wird die Schmelze effektiv homogenisiert und für die Entgasung vorbereitet.

Direkt daran anschließend ist eine Entgasungseinheit 5 vorgesehen, um allfällige Gasblasen und Gaseinschlüsse aus der homogenisierten Schmelze zu entfernen. Aus dem Stand der Technik sind ebenfalls diverse Vorrichtungen bekannt, um Gas effektiv aus der Schmelze auszubringen. So kann beispielsweise die Schnecke sehr lang ausgebildet sein, es kann eine Druckloszone vorgesehen sein, oder das Kunststoffmaterial kann über einen dünnen Film oder Schlauch entgast werden.

Ganz rechts im Schema von Fig. 1 sind eine Austragseinheit 6 sowie eine Nachfolgebearbeitungseinheit 7 vorgesehen. Die Austragseinheit 6 dient zur Überführung der entgasten Schmelze in die Nachfolgebearbeitungseinheit 7. Bei letzterer handelt es sich beispielsweise um eine Granulierungseinheit, eine Blasfolienanlage oder eine Spritzgussanlage, die die Schmelze wieder in eine feste Form, beispielsweise in ein Granulat oder eine Folie bringen.

In dem in Fig. 1 gezeigten Ausführungsbeispiel sind die Einheiten 1 bis 7 hintereinander geschaltet und das Kunststoffmaterial bzw. die Schmelze durchläuft die Einheiten 1 bis 7 in der vorgegebenen Reihenfolge kontinuierlich von links nach rechts. Zudem sind bei der Anordnung gemäß Fig. 1 die einzelnen Einheiten räumlich unmittelbar und direkt aneinandergekoppelt und das Material gelangt von jeder Einheit direkt und unmittelbar und ohne Zwischenschritte zur nächsten Einheit. Weitere Einheiten, insbesondere etwaige Zwischenlager, Überführungsschnecken od. dgl., sind zwar möglich, in Fig. 1 allerdings nicht vorgesehen. Dadurch wird die Vorrichtung gemäß Fig. 1 auch relativ kurz und kompakt.

Die Einheiten 2 bis 7, das heißt, die Aufschmelzeinheit 2 bis zur Nachfolgebearbeitungseinheit 7, liegen auf einer gemeinsamen Längsachse bzw. sind axial hintereinander angeordnet. Dadurch wird die gesamte Vorrichtung sehr schmal und platzsparend.

Weiters ist eine Steuerung vorgesehen, die die Temperaturen in jeder einzelnen der Einheit unabhängig voneinander steuern kann. Auf diese Weise kann jeder beliebige Temperaturverlauf in der Verarbeitungskette eingestellt werden.

Vorteilhafterweise ist die Temperatur so gesteuert, dass die Temperatur T4 in der Homogenisierungseinheit 4 bzw. die Temperatur T4 des Materials bzw. der Schmelze während der Homogenisierung, zumindest aber am Ende der Homogenisierung, jedoch auf jeden Fall vor Beginn der Entgasung in der Entgasungseinheit 5, gleich hoch oder höher ist, als in jedem einzelnen der anderen Behandlungsschritte bzw. in jeder anderen Einheit der Anordnung. So sind beispielsweise die Temperatur T2 in der Aufschmelzeinheit 2, die Temperatur T3 der Filtrationseinheit 3, die Temperatur T5 in der Entgasungseinheit 5, die Temperatur T6 in der Austragseinheit 6 sowie die Temperatur T7 in der Nachfolgebearbeitungseinheit 7, jeweils geringer bzw. maximal gleich hoch, wie die Temperatur T4 in der Homogenisierungseinheit 4.

Zudem ist eine Einheit 8 zur Zugabe von zellbildenden Medien vorgesehen, über die beispielsweise Kohlendioxid, Stickstoff oder Wasser in die Schmelze eingebracht werden kann. Auf diese Weise wird die Entgasungsleistung verbessert. Die Zugabe dieser zellbildenden Medien erfolgt insbesondere in die Homogenisierungseinheit 4 bzw. knapp vor oder nach der Homogenisierung, in jedem Fall jedoch nach der Filtration oder auch vor der Entgasung.

In der Austragseinheit 6 ist weiters eine Schmelzekühleinrichtung 9 angeordnet, um die aus der Entgasungseinheit 5 austretende Schmelze abzukühlen. Dabei handelt es sich beispielsweise um einen Zylinder oder eine Schnecke. Die Temperatur der Schmelze reduziert sich dabei um bis zu 20%, vorzugsweise um 5 bis 10%.

In Fig. 2 ist, in Erweiterung und unter Zugrundelegung der Ausführungen zu Fig. 1, eine konkrete Ausführungsform einer vorteilhaften Vorrichtung zur Durchführung des erfindungsgemäßen Verfahrens im Detail dargestellt.

Diese Vorrichtung umfasst als Aufbereitungseinheit 1 einen topfförmigen Behälter bzw. Schneidverdichter 1, in den das zu behandelnde Kunststoffgut oben eingefüllt wird. Im Bereich des Bodens 33 des Behälters 1 ist ein Werkzeug 34 in bekannter Weise um eine vertikale, mittig im Behälter 1 angeordnete Achse drehbar gelagert und zur Rotation über eine den Boden 33 durchsetzende Welle 35 von einem Motor 36 angetrieben. Das Werkzeug 34 hat zumindest zwei radiale Arme 37, die mit zweckmäßig als Schneidkanten ausgebildeten Arbeitskanten 38 für das Kunststoffmaterial versehen sind. Diese Arbeitskanten 38 vermischen das zugeführte Kunststoffmaterial und führen gegebenenfalls auch eine Zerkleinerung desselben durch.

Das so bearbeitete Kunststoffmaterial gelangt in eine Aufschmelzeinheit 2 und zwar in ein Gehäuse 10 eines ersten Schneckenabschnittes 11. Dieser Schneckenabschnitt 11 ragt in eine vom Gehäuse 10 gebildete Öffnung 12 hinein. Bei der Drehung der Werkzeuge 34 um die Achse der Welle 35 steigt das im Behälter 1 umlaufende Kunststoffmaterial in Form einer Mischthrombe entlang den Behälterwänden hoch, was durch die Pfeile 13 angedeutet ist. Die auf das umlaufende Kunststoffmaterial ausgeübte Fliehkraft unterstützt den Einzug des Kunststoffmateriales durch die Öffnung 12 in das tangential an den Behälter 1 angeschlossene Gehäuse 10 der Schnecke 11. Alternativ kann das Schneckengehäuse 10 auch etwa annähernd radial an den Behälter 1 angeschlossen sein. Der Kerndurchmesser des ersten Schneckenabschnittes 11 vergrößert sich in Richtung von der Öffnung 12 weg, wodurch das vom Schneckenabschnitt 11 eingezogene Kunststoffmaterial komprimiert und plastifiziert wird.

Das plastifizierte Material tritt aus dem Gehäuse 10 des ersten Schneckenabschnittes 11 durch Öffnungen 14 in eine Filtrationseinheit 3 ein und strömt über Verbindungskanäle 15 zu zumindest einem Filter 16, der die in der Kunststoffschmelze enthaltenen groben Verunreinigungen herausfiltert.

Nach Passieren der Filtrationseinheit 3 gelangt das plastifizierte Kunststoffmaterial über Verbindungskanäle 15 und über Einströmöffnungen 17 in eine Homogenisierungseinheit 4, die sich im Inneren eines weiteren Gehäuses 18 befindet. In der Homogenisierungseinheit 4 ist ein koaxial mit der Schnecke 11 ausgerichteter Homogenisator 40 in Form eines zylindrischen Drehkörpers angeordnet, wobei sich der Homogenisator 40 im Gehäuse 18 dreht und dadurch auf den ihn umströmenden Polymerfilm bzw. -schlauch eine scherende und mischende Wirkung ausübt. Um die Mischwirkung und auch die Schereffekte zu erhöhen, ist auf der Außenfläche des Homogenisators 40 eine größere Anzahl von Erhebungen 41 angeordnet. Bereits in diesem Abschnitt können sich allfällig bildende Gase entweichen.

Im Gehäuse 18 ist weiters ein zweiter Schneckenabschnitt 19 drehbar gelagert, der koaxial an den Homogenisator 40 anschließt. Dieser zweite Schneckenanschnitt 19 fördert das plastifizierte Kunststoffmaterial in einen Entgasungsbereich bzw. eine Entgasungseinheit 5, vorbei an Entgasungsöffnungen 20, durch welche die aus dem Kunststoffmaterial ausgetretenen Gase abgeführt, gesammelt und gegebenenfalls einer weiteren Verwendung zugeführt werden können.

Nach Passieren dieser Entgasungsöffnungen 20 gelangt das Kunststoffmaterial über eine Austragseinheit 6 in Form einer Austragsschnecke mit geringer Scherleistung, zu einem Auslaß 21, an den Werkzeuge bzw. Nachfolgebearbeitungseinheiten 7, z.B. Granuliereinrichtungen, angeschlossen sein können.

Zweckmäßig sind die beiden Schneckenabschnitte 11, 19 in Bohrungen 40 bzw. 41 der beiden Gehäuse 10 bzw. 18 gelagert, welche Bohrungen relativ zueinander koaxial angeordnet sind und jeweils gleichen Durchmesser aufweisen. Die koaxiale Anordnung der beiden Schneckenabschnitte 11, 19 und des Homogenisators 40 ermöglicht es in einfacher Weise, diese beiden Schneckenabschnitte 11, 19 zu einem einzigen Baukörper mit gemeinsamen Kern zu vereinigen und die beiden Schneckenabschnitte 11, 19 von einer Seite her gemeinsam anzutreiben, also von der in Fig. 2 linken Seite her. Die Umlaufrichtung der beiden Schneckenabschnitte 11, 19 ist durch einen Pfeil 23 angedeutet.

Um die Entgasung des bearbeiteten Kunststoffmateriales im Gehäuse 18 zu begünstigen, hat die Entgasungseinheit 5 im Bereich der Einströmöffnung 17 und der Entgasungsöffnung 20 eine Druckloszone 27, die von einem verringerten Kerndurchmesser des Schneckenabschnittes 19 gebildet ist. Nach der Entgasungsöffnung 20 geht dieser verringerte Kerndurchmesser wieder in den vollen Kerndurchmesser der Austragseinheit 6 über, um das Kunststoffmaterial wieder unter Druck und damit genügend plastifiziert zu halten.

Auch in dem in Fig. 2 gezeigten Ausführungsbeispiel sind die Einheiten 1 bis 7 hintereinander geschaltet und das Kunststoffmaterial bzw. die Schmelze durchläuft die Einheiten 1 bis 7 kontinuierlich in der vorgegebenen Reihenfolge. Zudem sind die einzelnen Einheiten räumlich unmittelbar und direkt aneinandergekoppelt und das Material gelangt von jeder einzelnen Einheit direkt und unmittelbar und ohne Zwischenschritte zur nächsten stromabwärts benachbarten Einheit. Die Einheiten 2 bis 6, das heißt, die Aufschmelzeinheit 2 bis zur Austragseinheit 6, liegen zudem auf einer gemeinsamen Längsachse bzw. deren Schnecken sind axial hintereinander angeordnet, wodurch die gesamte Vorrichtung sehr schmal und platzsparend wird.

Ohne vom Kern der Erfindung abzuweichen, sind verschiedene vorrichtungsmäßige Ausgestaltungen der Anordnung möglich. So ist in den entsprechenden Einheiten beispielsweise der Einsatz von Einfachschnecken, Doppelschnecken oder auch Mehrfachschnecken möglich. Außerdem können die einzelnen Verfahrenschritte unter Atmosphärenbedingungen oder mit Vakuumunterstützung ablaufen.

Für jede einzelne Einheit sind zahlreiche konstruktive Ausgestaltungen möglich, die der Fachmann dem Stand der Technik entnehmen kann. Die Temperaturen, die Verweilzeiten und die weiteren Parameter sind in erster Linie von dem zu bearbeiteten bzw. recyclierenden Material abhängig und können vom Fachmann angepasst werden. Die erfindungsgemäßen Vorteile können jedoch nur dann erreicht werden, wenn der Fachmann das Verfahren und/oder die Vorrichtung der vorliegenden Erfindung verwendet.

Die nachfolgenden Beispiele demonstrieren die vorteilhaften technischen Effekte des erfindungsgemäßen Verfahrens bzw. der Vorrichtung:

Dabei wurden verschmutzte Kunststoffmaterialien, z.B. bedruckte oder mit Klebeetiketten versehen Folien, in parallelen Vergleichsversuchen behandelt und zwar einmal in einer aus dem Stand der Technik bekannten Anlage ohne Homogenisierung nach dem üblichen Verfahren und parallel dazu in der erfindungsgemäßen Anlage nach dem erfindungsgemäßen Verfahren mit Homogenisierung, wobei die unmittelbar vergleichbaren Betriebsparameter, z.B. die Temperaturen, Durchsätze, Verweilzeiten, Drücke etc., im Schneidverdichter oder bei der Nachbearbeitung möglichst identisch gehalten wurden.

### 1. Beispiel: Verarbeitung von bedruckten Kunststofffolien

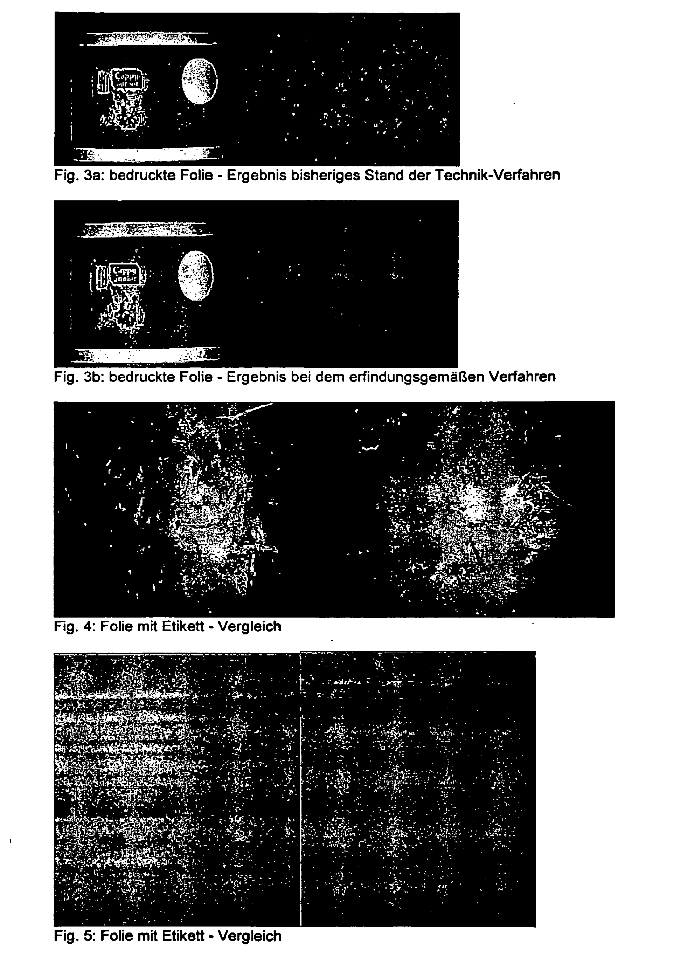

Die Abbildungen der Fig. 3a und 3b zeigen vergleichend die Ausgangsprodukte und die daraus erhaltenen Endprodukte. Im jeweils linken Bereich der Fig. 3a und 3b ist die zu behandelnde Eingangsfolie in Form einer farbig bedruckten Kunststofffolie dargestellt. Im jeweils rechten Bereich ist eine zu 100% aus dem nach der Behandlung erhaltenen Regenerat gefertigte Folie dargestellt.

Erkennbar ist, dass durch das bekannte Verfahren bzw. in der bekannten Vorrichtung keine vollständige Entgasung des Materials erfolgt und dass kleine Gasbläschen, hervorgerufen durch die zersetzten Druckerfarben, im Endprodukt verbleiben. Durch das erfindungsgemäße Verfahren, insbesondere durch die Homogenisierung vor der Entgasung, wird das Entgasungsergebnis noch weiter verbessert und es sind kaum Gasbläschen zu erkennen..

### 2. und 3. Beispiel: Verarbeitung von LD-PE Film mit Papieretiketten

Die Abbildungen der Fig. 4 und 5 zeigen wiederum vergleichend im jeweils linken Bereich das Ergebnis nach dem bisherigen Verfahren und im rechten Bereich das Ergebnis nach dem erfindungsgemäßen Verfahren. Ausgangsmaterialien waren jeweils transparente Verpackungsfilme aus LD-PE verunreinigt mit Papieretiketten. Der Verschmutzungsanteil lag bei etwa 1 % des Gesamtgewichts. Die Abbildungen 4 und 5 zeigen mikroskopische Aufnahmen von Filmen, hergestellt zu 100% aus dem nach der Bearbeitung erhaltenen recycelten Material. Die Filtrationsfeinheit beträgt in Fig. 4 110 µm, in Fig. 5 125 µm.

Erkennbar ist, dass im jeweils rechten Bereich (erfindungsgemäßes Verfahren) die Verschmutzungen, insbesondere Papierpartikel, Klebstoffreste, aber auch Gasbläschen, weniger, kleiner und auch feiner verteilt sind als im linken Bereich (Stand der Technik). Die mechanischen und optischen Eigenschaften dieser Folien sind dadurch besser.

In allen Fällen reduziert sich der Anteil an Verschmutzungen im Endprodukt somit deutlich und die Qualität steigt.

## Patentansprüche

1. Verfahren zur Recyclierung von Kunststoffen umfassend die folgenden Bearbeitungsschritte:
a) Aufbereitung des Rohmaterials, wobei das Material, falls erforderlich zerkleinert und, in eine fluidartige Form gebracht wird und unter Erhaltung seiner Stückigkeit und Riesetfähigkeit, erwärmt und permanent gemischt, und gegebenenfalls entgast, erweicht, getrocknet, in seiner Viskosität erhöht und/oder kristallisiert wird,
b) Aufschmelzen des aufbereiteten Materials, zumindest soweit, dass eine Filtration möglich ist,
c) Filtration der Schmelze zur Befreiung von Verunreinigungen,
d) Homogenisierung der filtrierten Schmelze,
e) Entgasung der homogenisierten Schmelze, sowie
f) Austragung und/oder Nachfolgebearbeitung der Schmelze, z.B. durch Granulierung, Blasfolienbearbeitung,
wobei diese Bearbeitungsschritte in der angegebenen Reihenfolge aufeinanderfolgen, **dadurch gekennzeichnet, dass** die Temperatur (T4) des Materials bzw. der Schmelze während, zumindest aber am Ende, der Homogenisierung gemäß Bearbeitungsschritt d) und vor Beginn der Entgasung zumindest gleich hoch wie, vorzugsweise höher als, die Temperaturen bei allen anderen Behandlungsschritten a) bis f) ist.

2. Verfahren nach Anspruch 1, **dadurch gekennzeichnet, dass** die Bearbeitungsschritte a) bis f) zeitlich und örtlich unmittelbar und direkt ohne Zwischenschritte aufeinanderfolgen.

3. Verfahren nach Anspruch 1 oder 2, **dadurch gekennzeichnet, dass** die Schmelze bei der Homogenisierung geschert und gemischt wird bzw. einer intensiven Scherspannung und Dehnspannung unterworfen und stark beschleunigt wird.

4. Verfahren nach einem der Ansprüche 1 bis 3, **dadurch gekennzeichnet, dass** die Temperatur (T6) des Materials bzw. der Schmelze bei der Austragung bzw. die Temperatur (T7) bei der Nachfolgebearbeitung geringer ist als, oder maximal gleich ist wie, die Temperatur (T4) während bzw. am Ende der Homogenisierung.

5. Verfahren nach einem der Ansprüche 1 bis 4, **dadurch gekennzeichnet, dass** während der Homogenisierung oder unmittelbar vor oder nach der Homogenisierung, jedoch nach der Filtration und vor der Entgasung, zur Verbesserung der Entgasungsleistung zellbildende Medien, z.B. Kohlendioxid, Stickstoff oder Wasser, in die Schmelze eingebracht werden.

6. Verfahren nach einem der Ansprüche 1 bis 5, **dadurch gekennzeichnet, dass** die Schmelze nach der Entgasung und bei oder vor der Austragung bzw. Nachfolgebearbeitung, insbesondere um bis zu 20%, vorzugsweise um 5 bis 10%. abgekühlt wird.

7. Anordnung zur Recyclierung von Kunststoffen zur Durchführung eines Verfahrens nach einem der Ansprüche 1 bis 6, umfassend:
a) zumindest eine Aufbereitungseinheit (1), insbesondere einen an sich bekannten Schneidverdichter bzw. Behälter mit umlaufenden Misch- und Zerkleinerungswerkzeugen, wobei das Material, falls erforderlich, zerkleinert und, in eine fluidartige Form gebracht wird und unter Erhaltung seiner Stückigkeit und Rieselfähigkeit, erwärmt und permanent gemischt, und gegebenenfalls entgast erweicht, getrocknet, in seiner Viskosität erhöht und/oder kristallisiert wird,
b) zumindest eine Aufschmelzeinheit (2) zum Aufschmelzen des aufbereiteten Materials, zumindest soweit, dass eine Filtration möglich ist, insbesondere einen Extruder,
c) zumindest eine Filtrationseinheit (3) zur Filtration der Schmelze,
d) zumindest eine Hornogenisierungseinheit (4) zur Homogenisierung der filtrierten Schmelze,
e) zumindest eine Entgasungseinheit (5) zur Entgasung der homogenisierten Schmelze sowie
f) zumindest eine Austragseinheit (6) zum Austrag und/oder zumindest eine Nachfolgebearbeitungseinheit (7) zur Bearbeitung der Schmelze,
wobei die genannten Einheiten (1) bis (6) bzw. (7) in der angegebenen Reihenfolge jeweils nachelnander geschaltet und hintereinander bzw. aneinander gekoppelt sind und das Kunststoffmaterial bzw. die Schmelze diese Einheiten (1) bis (6) bzw. (7) in dieser Reihenfolge durchläuft,
**dadurch gekennzeichnet, dass** eine Steuerung zur Regulierung der jeweiligen Temperaturen des Materials bzw. der Schmelze in den Einheiten (1) bis (6) bzw. (7) vorgesehen ist.

8. Anordnung nach Anspruch 7, **dadurch gekennzeichnet, dass** die Einheiten (1) bis (6) bzw. (7) räumlich unmittelbar und direkt, ohne weitere dazwischengeschaltete Einheiten, nacheinander geschaltet und prozessual hintereinander gekoppelt sind.

9. Anordnung nach einem der Ansprüche 7 oder 8, **dadurch gekennzeichnet, dass** die *Temperaturen durch die Steuerung so regelbar sind*, dass die Temperatur (T4) des Materials bzw. der Schmelze während, zumindest aber am Ende, der Homogenisierung in der Homogenisierungseinheit (4) und vor Beginn der Entgasung in der Entgasungseinheit (5) zumindest gleich hoch wie, vorzugsweise höher als, bei allen anderen Behandlungsschritten in den anderen Einheiten ist, insbesondere dass die Temperatur (T6) des Materials bzw. der Schmelze bei der Austragung in der Austragungseinheit (6) bzw. die Temperatur (T7) während der Nachfolgebearbeitung in der Nachfolgebearbeitungseinheit (7) geringer ist als, oder maximal gleich ist wie, die Temperatur (T4) während bzw. am Ende der Homogenisierung in der Homogenisierungseinheit (4).

10. Anordnung nach einem der Ansprüche 7 bis 9, **dadurch gekennzeichnet, dass** die Homogenisierungseinheit (4), insbesondere eine Schnecke, derart ausgebildet ist, dass die Schmelze darin geschert und gemischt wird bzw. einer intensiven Scherspannung und Dehnspannung unterworfen und stark beschleunigt wird.

11. Anordnung nach einem der Ansprüche 7 bis 10, **dadurch gekennzeichnet, dass** die Einheiten (2) bis (5), vorzugsweise (2) bis (6), insbesondere (2) bis (7), axial hintereinander angeordnet sind bzw. auf einer gemeinsamen Längsachse liegen.

12. Anordnung nach einem der Ansprüche 7 bis 11, **dadurch gekennzeichnet, dass** eine Einheit (8) zur Zugabe von zellbildenden Medien, z.B. Kohlendioxid, Stickstoff oder Wasser, in die Schmelze, vorgesehen ist, wobei die Einheit (8) die zellbildenden Medien während der Homogenisierung oder unmittelbar vor oder nach der Homogenisierung, jedoch nach der Filtration und vor der Entgasung, einbringt.

13. Anordnung nach einem der Ansprüche 7 bis 12, **dadurch gekennzeichnet, dass**, insbesondere in der Austragseinheit (6), eine Kühleinrichtung (9) für die aus der Entgasungseinheit (5) austretende Schmelze, beispielsweise ein Zylinder oder eine Schnecke, vorgesehen ist, die geeignet ist, die Schmelze nach der Entgasung und bei oder vor der Austragung bzw. Nachfolgebearbeitung, insbesondere um bis zu 20%, vorzugsweise um 5 bis 10%, abzukühlen.

## Claims

1. A method for recycling plastic materials comprising the following process steps:
(a) Preparation of the raw material, wherein the material, if required, is comminuted and brought into a fluid-like form and while preserving its lumpiness and pourability, is heated and permanently mixed, and optionally degassed, softened, dried, increased in its viscosity and/or crystallized,
(b) melting the reprocessed material, at least so much, that filtration is possible,
(c) filtering the melt in order to remove impurities,
(d) homogenizing the filtered melt,
(e) degassing the homogenized melt, and
(f) discharging and/or subsequently processing the melt, e.g. by granulation, blown film processing,
wherein these process steps occur consecutively in the order listed, **characterized in that** the temperature (T4) of the material or the melt during, at least, however, at the end, of the homogenization according to processing step d) and before the beginning of the degassing is at least equally high as, preferably higher than, the temperatures in all other treatment steps a) to f).

2. A method according to claim 1, **characterized in that** the processing steps a) to f) occur consecutively temporally and locally immediately and directly without intermediate steps.

3. A method according to claim 1 or 2, **characterized in that** the melt is sheared and mixed during the homogenization or is subjected to an intense shear stress or tensile stress and is greatly accelerated.

4. A method according to one of claims 1 to 3, **characterized in that** the temperature (T6) of the material or the melt during the discharge or the temperature (T7) during the subsequent processing is less than or maximally the same as the temperature (T4) during or at the end of the homogenization.

5. A method according to one of claims 1 to 4, **characterized in that** during the homogenization or immediately before or after the homogenization, however, after the filtration and before the degassing, cell-forming media, for example, carbon dioxide, nitrogen or water, are introduced into the melt in order to improve the degassing capacity.

6. A method according to one of claims 1 to 5, **characterized in that** the melt after the degassing and during or before the discharge or subsequent processing, is cooled down by up to 20%, preferably by 5 to 10%.

7. An arrangement for recycling plastic material for implementing a method according to one of claims 1 to 6 comprising:
(a) at least one preparation unit (1), in particular, a cutter compactor known per se or container with rotary mixing and crushing tools, wherein the material, if required, is comminuted and brought into a fluid-like form and while preserving its lumpiness and pourability, is heated and permanently mixed, and optionally degassed, softened, dried, increased in its viscosity and/or crystallized,
(b) at least one melting unit (2) for melting the prepared material, at least to the extent that a filtration is possible, in particular, an extruder,
(c) at least one filtration unit (3) for the filtration of the melt,
(d) at least one homogenization unit (4) for the homogenization of the filtered melt,
(e) at least one degassing unit (5) for the degassing of the homogenized melt, and
(f) at least one discharging unit (6) for the discharge and/or at least one subsequent processing unit (7) for the processing of the melt,
wherein the units cited (1) to (6) or (7) in the order listed are each operated in succession and coupled one after the other or to another and the plastic material or the melt passes through these units (1) to (6) or (7) in this order,
**characterized in that** a control for the regulation of the respective temperatures of the material or the melt is provided in the units (1) to (6) or (7).

8. An arrangement according to claim 7, **characterized in that** the units (1) to (6) or (7) are operated spatially immediately and directly one after the other, without further units operated in between and are coupled procedurally one after the other.

9. An arrangement according to one of claims 7 or 8, **characterized in that** the temperatures can be regulated by the control such that the temperature (T4) of the material or the melt during, at least, however, at the end, of the homogenization in the homogenization unit (4) and before the beginning of the degassing in the degassing unit (5) is at least equally high as, preferably higher than, in all other treatment steps in the other units, particularly that the temperature (T6) of the material or of the melt during the discharge in the discharge unit (6) or the temperature (T7) during the subsequent processing in the subsequent processing unit (7) is less than or maximally the same as the temperature (T4) during or at the end of the homogenization in the homogenization unit (4).

10. An arrangement according to one of claims 7 to 9, **characterized in that** the homogenization unit (4), in particular, a screw, is designed such that the melt is sheared and mixed therein or is subjected to an intense shear stress and tensile stress and is greatly accelerated.

11. An arrangement according to one of claims 7 to 10, **characterized in that** the units (2) to (5), preferably (2) to (6), in particularly (2) to (7), are arranged axially one after the other or lie on a common longitudinal axis.

12. An arrangement according to one of claims 7 to 11, **characterized in that** a unit (8) for the addition of cell-forming media, for example, carbon dioxide, nitrogen or water, into the melt, is provided, wherein the unit (8) introduces the cell-forming media during the homogenization or immediately before or after the homogenization, however, after the filtration and before the degassing.

13. An arrangement according to one of claims 7 to 12, **characterized in that**, particularly in the discharge unit (6), a cooling device (9) for the melt escaping from the degassing unit (5), for example, a cylinder or a screw, is provided, which is suitable for cooling down the melt after the degassing and during or before the discharge or subsequent processing, in particular, by up to 20%, preferably by 5 to 10%.

## Revendications

1. Procédé pour le recyclage de matières plastiques, comportant les étapes de traitement suivantes :
a) préparation du matériau brut, le matériau étant broyé si nécessaire et amené dans une forme fluide et, moyennant l'obtention de son broyage et de sa fluidité, étant chauffé et brassé en permanence et, le cas échéant, étant dégazé, amolli, séché, rendu plus visqueux et/ou cristallisé,
b) mise en fusion du matériau préparé, du moins jusqu'à ce qu'une filtration soit possible,
c) filtration du matériau en fusion pour libérer les impuretés,
d) homogénéisation du matériau en fusion filtré,
e) dégazage du matériau en fusion homogénéisé, et
f) extraction et/ou traitement ultérieur du matériau en fusion, par exemple par granulation, traitement des feuilles par soufflage,
lesdites étapes de traitement se succédant dans l'ordre indiqué,
**caractérisé en ce que** la température (T4) du matériau ou du matériau en fusion pendant, mais au moins à la fin de l'homogénéisation selon l'étape d) et avant le début du dégazage est au moins égale, de préférence supérieure aux températures dans toutes les autres étapes de traitement a) à f).

2. Procédé selon la revendication 1, **caractérisé en ce que** les étapes de traitement a) à f) se succèdent immédiatement et directement sans étape intermédiaire.

3. Procédé selon la revendication 1 ou 2, **caractérisé en ce que**, pendant l'homogénéisation, le matériau en fusion est cisaillé et brassé ou est soumis à une contrainte de cisaillement et une contrainte d'allongement intensives et est fortement accéléré.

4. Procédé selon l'une quelconque des revendications 1 à 3, **caractérisé en ce que** la température (T6) du matériau ou du matériau en fusion au moment de l'extraction, ou la température (T7) lors du traitement ultérieur sont inférieures, ou au maximum sont égales à la température (T4) pendant ou à la fin de l'homogénéisation.

5. Procédé selon l'une quelconque des revendications 1 à 4, **caractérisé en ce que** pendant l'homogénéisation ou immédiatement avant ou après l'homogénéisation, néanmoins après la filtration et avant le dégazage, des agents nucléants, tels que le dioxyde de carbone, l'azote ou l'eau, sont introduits dans le matériau en fusion en vue d'améliorer la puissance du dégazage.

6. Procédé selon l'une quelconque des revendications 1 à 5, **caractérisé en ce que**, après le dégazage et pendant ou avant l'extraction ou le traitement ultérieur, le matériau en fusion est refroidi en particulier jusqu'à 20 %, de préférence de 5 à 10 %.

7. Ensemble pour le recyclage de matières plastiques en vue de la mise en oeuvre d'un procédé selon l'une quelconque des revendications 1 à 6, comportant :
a) au moins une unité de préparation (1), en particulier un compacteur à couteaux, connu en soi, ou une cuve avec des outils de broyage et de brassage rotatifs, le matériau étant broyé, si nécessaire, et amené dans une forme fluide et, moyennant l'obtention de son broyage et de sa fluidité, étant chauffé et brassé en permanence et, le cas échéant, étant dégazé, amolli, séché, rendu plus visqueux et/ou cristallisé,
b) au moins une unité de mise en fusion (2) pour mettre en fusion le matériau préparé, du moins jusqu'à ce qu'une filtration soit possible, en particulier une extrudeuse,
c) au moins une unité de filtration (3) pour la filtration du matériau en fusion,
d) au moins une unité d'homogénéisation (4) pour l'homogénéisation du matériau en fusion filtré,
e) au moins une unité de dégazage (5) pour le dégazage du matériau en fusion homogénéisé, et
f) au moins une unité d'extraction (6) pour extraire et/ou au moins une unité de traitement ultérieur (7) pour le traitement du matériau en fusion,
lesdites unités (1) à (6) ou (7) étant montées respectivement les unes après les autres dans l'ordre indiqué et étant couplées les unes derrière les autres ou les unes contre les autres et la matière plastique ou le matériau en fusion traversant lesdites unités (1) à (6) ou (7) dans cet ordre,
**caractérisé en ce qu'**il est prévu une commande pour réguler les températures respectives du matériau ou du matériau en fusion dans les unités (1) à (6) ou (7).

8. Ensemble selon la revendication 7, **caractérisé en ce que** les unités (1) à (6) ou (7) sont montées dans l'espace immédiatement et directement les unes après les autres sans autre unité intercalée, et, sur le plan du processus, sont couplées les unes derrière les autres.

9. Ensemble selon la revendication 7 ou 8, **caractérisé en ce que** les températures peuvent être réglées par la commande de telle sorte que la température (T4) du matériau ou du matériau en fusion pendant, néanmoins au moins à la fin de l'homogénéisation dans l'unité d'homogénéisation (4) et avant le début du dégazage dans l'unité de dégazage (5) est au moins égale, de préférence supérieure aux températures dans toutes les autres étapes de traitement dans les autres unités, en particulier **en ce que** la température (T6) du matériau ou du matériau en fusion au moment de l'extraction dans l'unité d'extraction (6), ou la température (T7) pendant le traitement ultérieur dans l'unité de traitement ultérieur (7) sont inférieures, ou au maximum sont égales à la température (T4) pendant ou à la fin de l'homogénéisation dans l'unité d'homogénéisation (4).

10. Ensemble selon l'une quelconque des revendications 7 à 9, **caractérisé en ce que** l'unité d'homogénéisation (4), en particulier une vis sans fin, est configurée de telle sorte que, dans celle-ci, le matériau en fusion est cisaillé et brassé ou est soumis à une contrainte de cisaillement et une contrainte d'allongement intensives et est fortement accéléré.

11. Ensemble selon l'une quelconque des revendications 7 à 10, **caractérisé en ce que** les unités (2) à (5), de préférence (2) à (6), en particulier (2) à (7) sont disposées dans le sens axial les unes derrière les autres, plus précisément sont disposées sur un axe longitudinal commun.

12. Ensemble selon l'une quelconque des revendications 7 à 11, **caractérisé en ce qu'**il est prévu une unité (8) pour ajouter au matériau en fusion des agents nucléants, tels que le dioxyde de carbone, l'azote ou l'eau, ladite unité (8) introduisant les agents nucléants pendant l'homogénéisation ou immédiatement avant ou après l'homogénéisation, néanmoins après la filtration et avant le dégazage.

13. Ensemble selon l'une quelconque des revendications 7 à 12, **caractérisé en ce qu'**il est prévu, en particulier dans l'unité d'extraction (6), un dispositif de refroidissement (9) pour le matériau en fusion sortant de l'unité de dégazage (5), par exemple un cylindre ou une vis sans fin qui est apte à refroidir le matériau en fusion, en particulier jusqu'à 20 %, de préférence de 5 à 10 %, après le dégazage et pendant ou avant l'extraction ou le traitement ultérieur.
